# EUROPEAN PATENT SPECIFICATION

(11) **EP 4 478 045 B1**
(45) Date of publication and mention of the grant of the patent: **07.10.2026**
(21) Application number: 24180007.7
(22) Date of filing: 04.06.2024
(51) Int. Cl.: G01N 30/72, G01N 30/86, H01J 49/00

(54) **ANALYSIS APPARATUS AND ANALYSIS METHOD**
ANALYSEVORRICHTUNG UND ANALYSEVERFAHREN
APPAREIL D'ANALYSE ET PROCÉDÉ D'ANALYSE

(30) Priority: 15.06.2023 JP 2023098330
(43) Date of publication of application: 18.12.2024
(73) Proprietor: JEOL Ltd., Akishima, Tokyo 196-8558 (JP)
(72) Inventor: KUBO, Ayumi, Tokyo, 196-8558 (JP); UBUKATA, Masaaki, Tokyo, 196-8558 (JP)
(74) Representative: Boult Wade Tennant LLP

(56) References cited:
- EP-B1- 2 235 523
- DE-A1- 10 324 149
- US-A1- 2016 047 782
- KIRSTEN SKOGERSON ET AL: "The volatile compound BinBase mass spectral database", BMC BIOINFORMATICS, BIOMED CENTRAL , LONDON, GB, vol. 12, no. 1, 4 August 2011 (2011-08-04), pages 321, XP021104618, ISSN: 1471-2105, DOI: 10.1186/1471-2105-12-321

## Description

### TECHNICAL FIELD

The present disclosure relates to an analysis apparatus and an analysis method, and in particular to a technique for estimating a composition of a compound.

### BACKGROUND

There are known various analysis systems that perform qualitative analysis of a compound. These analysis systems include an analysis system (GC-MS analysis system) formed from a gas chromatograph, a mass spectrometer, and an information processing apparatus.

In the GC-MS analysis system, in the gas chromatograph, a plurality of compounds included in a sample are temporally separated. In the mass spectrometer, mass spectrometry is performed on each compound. The information processing apparatus functions as a compound analysis apparatus. Specifically, in the information processing apparatus, a mass spectrum array formed from a plurality of mass spectra arranged in a time sequential order is generated based on data which is output from the mass spectrometer, and a chromatogram is generated based on the mass spectrum array. For each peak included in the chromatogram, a composition of the compound (more specifically, a compositional formula) is estimated based on a corresponding mass spectrum.

In the GC-MS analysis system described above, a time from injection of the sample to the gas chromatograph to detection of the compound extracted from the sample in the gas chromatograph by the mass spectrometer is in general called a retention time. The retention time is also called an elution time. The retention time varies depending on various conditions in the gas chromatograph (for example, a type of a column, a length of the column, and a heating temperature).

As an index to be used in place of the retention time, a retention index is known. The retention index is an index which is calculated based on a sequence of retention times specified by introducing a reference substance (for example, n-alkane) into the gas chromatograph (for example, refer to JP 4438674 B (Document 1)). The retention index is used for identifying the compound. For example, when a plurality of compound candidates are selected based on a mass spectrum of an unknown compound, the plurality of compound candidates can be narrowed down by the retention index of the unknown compound (for example, refer to JP 2014-524568 A (Document 2)).

In the GC-MS analysis system described above, the mass spectrometer has an ion source for ionizing a compound. As a method of ionization, various methods are known. Of these known methods, an electron ionization method (EI method) is a kind of a hard ionization method, and, when the EI method is used, molecular ions of the compound are detected in some cases, and, in some other cases, and the molecular ions of the compound are not detected. That is, a mass spectrum generated using the ion source which follows the EI method (EI mass spectrum) includes a molecular peak (molecular ion peak) in some cases, and does not include the molecular peak in some other cases.

It is very difficult for a user viewing the EI mass spectrum of an unknown compound to judge whether or not the EI mass spectrum includes a molecular peak of the unknown compound. Similarly, it is difficult to automatically identify a molecular peak in the EI mass spectrum of the unknown compound. Even when an ionization method other than the EI method is to be used, a similar problem may occur, depending on the situation. Therefore, there exists a desire for establishment of a technique for accurately judging whether or not a mass spectrum of an unknown compound includes a molecular peak (and, in the case where the molecular peak is included, which peak is the molecular peak), based on the mass spectrum of the unknown compound.

The information processing apparatus in the GC-MS analysis system described above generally includes a composition estimation function. Specifically, when a mass spectrum of an unknown compound includes a molecular peak, an accurate mass corresponding to the molecular peak is specified, and a plurality of compositional formula candidates are calculated based on the accurate mass. Prior to this process, a range for the number of atoms (a lower limit and an upper limit) is designated by the user for each representative element, as a compositional formula estimation condition.

An advantage of the present disclosure lies in improvement of precision for estimating a composition of a compound. Alternatively, another advantage of the present disclosure lies in provision of a technique for accurately identifying a molecular peak included in a mass spectrum of a compound. Alternatively, another advantage of the present disclosure lies in provision of a technique for narrowing down conditions for estimating the composition of the compound.

DE 103 24 149A1 discloses a screening process, to identify an unknown substance in a sample uses a gas chromatography/mass spectrometry (GC/MS) or a liquid chromatography/mass spectrometry (LC/MS) process. A chromatogram is produced as a function of the sample retention time and a mass spectrum is taken at the time point for a substance in the chromatogram to be compared with known substances stored in the mass spectrum database. A retention index is determined at the time point, for comparison with retention indexes of known substances stored in the retention index database. At least one substance is selected from a database which matches the retention index and the mass spectrum is compared with those for selected substances to identify the unknown substance.

### SUMMARY

According to one aspect of the present disclosure, there is provided an analysis apparatus comprising: a calculator that calculates, based on a detection time at which a compound from a gas chromatograph is detected by a mass spectrometer, a retention index of the compound; a generator that generates a mass spectrum of the compound based on data acquired through mass spectrometry of the compound; a setter that sets a search range on the mass spectrum of the compound based on the retention index, the search range being a mass-to-charge ratio range; and an estimator that estimates, when there is a molecular peak corresponding to the compound in the search range of the mass spectrum of the compound, a composition of the compound based on a molecular mass specified from the molecular peak, wherein the setter sets a lower limit of the search range based on the retention index, and sets a upper limit of the search range based on the retention index.

According to another aspect of the present disclosure, there is provided an analysis method comprising the steps of: calculating, based on a detection time at which a compound from a gas chromatograph is detected by a mass spectrometer, a retention index of the compound; generating a mass spectrum of the compound based on data acquired through mass spectrometry of the compound; setting a search range on the mass spectrum of the compound based on the retention index, the search range being a mass-to-charge ratio range; and estimating, when there is a molecular peak corresponding to the compound in the search range of the mass spectrum of the compound, a composition of the compound based on a molecular mass specified from the molecular peak wherein setting a search range comprises: setting a lower limit of the search range based on the retention index, and setting a upper limit of the search range based on the retention index.

### BRIEF DESCRIPTION OF DRAWINGS

Embodiment(s) of the present disclosure will be described based on the following figures, wherein:
FIG. 1 is a block diagram showing an analysis system according to an embodiment of the present disclosure;
FIG. 2 is a first scatter diagram showing a relationship between a retention index and a molecular weight;
FIG. 3 is a second scatter diagram showing a relationship between the retention index and a number of carbon atoms;
FIG. 4 is a diagram showing statistical information related to a molecular mass for each retention index segment;
FIG. 5 is a diagram showing statistical information related to a number of carbon atoms for each retention index segment;
FIG. 6 is a diagram showing an example in which a molecular peak exists in a molecular mass range;
FIG. 7 is a diagram showing an example in which the molecular peak does not exist in the molecular mass range;
FIG. 8 is a diagram showing a change of a part of composition estimation conditions;
FIG. 9 is a diagram showing a method of estimating a composition;
FIG. 10 is a diagram showing a flowchart showing an analysis method according to an embodiment of the present disclosure; and
FIG. 11 is a diagram showing an example of a search of a monoisotopic peak.

### DESCRIPTION OF EMBODIMENTS

An embodiment of the present disclosure will now be described with reference to the drawings.

### (1) Overview of Embodiment

An analysis apparatus according to an embodiment of the present disclosure comprises a calculator, a generator, a setter, and an estimator. The calculator calculates, based on a detection time at which a compound from a gas chromatograph is detected by a mass spectrometer, a retention index of the compound. The generator generates a mass spectrum of the compound based on data acquired through mass spectrometry of the compound. The setter sets a search range on the mass spectrum of the compound based on the retention index. The estimator estimates, when there is a molecular peak corresponding to the compound in the search range of the mass spectrum of the compound, a composition of the compound based on a molecular mass specified from the molecular peak.

According to the structure described above, because the molecular peak is searched in the search range, precision of identification of the molecular peak can be improved. As a consequence, precision of estimation of the composition of the compound can be improved.

The time from injection of the sample into the gas chromatograph to the detection of the compound extracted from the sample in the gas chromatograph by the mass spectrometer is generally called a retention time. The detection time described above is the retention time or a time corresponding to the retention time. The search range is a range through which the molecular peak is searched, and is more specifically a mass-to-charge ratio range. In the embodiment, the search range is set based on a molecular weight range or a molecular mass range. The lower limit and the upper limit of the search range are specified by a molecular weight, an integer mass, or an accurate mass. The molecular mass specified from the molecular peak and for estimating the composition is normally the accurate mass. The molecular peak is specified automatically or by the user. A processor to be described later corresponds to the calculator, the generator, the setter, and the estimator.

In an embodiment of the present disclosure, the setter sets the search range according to a first mathematical model for determining a lower limit and an upper limit of the search range based on the retention index. The first mathematical model is formed from, for example, one or both of a table and a calculation formula.

In an embodiment of the present disclosure, the first mathematical model is a mathematical model generated based on a plurality of pieces of compound information registered in a compound database. Each piece of compound information includes a retention index and information indicating a molecular mass.

In an embodiment of the present disclosure, the analysis apparatus further comprises a searcher that searches for the molecular peak in the search range of the mass spectrum of the compound. According to this structure, the molecular peak is specified automatically.

In an embodiment of the present disclosure, the searcher specifies, among one or a plurality of peaks belonging to the search range, a peak which satisfies a peak intensity condition and which exists at a highest mass side, as a candidate peak. When there is a peak that satisfies the peak intensity condition and a monoisotopic condition at a lower mass side of the candidate peak, the searcher judges the peak as the molecular peak. When there is no peak that satisfies the peak intensity condition and the monoisotopic condition at the lower mass side of the candidate peak, the searcher judges the candidate peak as the molecular peak. According to this structure, it becomes possible to judge the monoisotopic peak as the molecular peak, and thus, composition estimation can be performed correctly. The monoisotopic condition is a condition for specifying a monoisotopic peak among a plurality of isotope peaks.

In an embodiment of the present disclosure, when there is no molecular peak in the search range of the mass spectrum of the compound, information indicting non-detection of a molecular ion is provided to a user. With provision of such information, it is possible to promote employment of other composition estimation methods which are not based on the molecular peak.

In an embodiment of the present disclosure, the analysis apparatus further comprises a display processing unit that displays, along with the mass spectrum, a range image indicating the search range. According to this structure, it becomes easier for the user to specify the molecular peak, or it becomes possible for the user to confirm that the search range is correctly set.

In an embodiment of the present disclosure, the setter is a first setter, and a second setter is provided, which sets a number-of-carbon-atoms range based on the retention index. The estimator estimates the composition of the compound according to a composition estimation condition including the number-of-carbon-atoms range. According to this structure, precision of estimating the composition of the compound can be improved. The number of carbon atoms refers to a number of the carbon atoms included in the compound.

In an embodiment of the present disclosure, the second setter sets the number-of-carbon-atoms range according to a second mathematical model for determining a lower limit and an upper limit of the number-of-carbon-atoms range based on the retention index. The second mathematical model is formed from one or both of a table and a calculation formula.

In an embodiment of the present disclosure, the second mathematical model is a mathematical model generated based on a plurality of pieces of compound information registered in a compound database. Each piece of the compound information includes a retention index and information indicating a number of carbon atoms.

An analysis method according to an embodiment of the present disclosure comprises a calculation step, a generation step, a setting step, and an estimation step. In the calculation step, based on a detection time at which a compound from a gas chromatograph is detected by a mass spectrometer, a retention index of the compound is calculated. In the generation step, a mass spectrum of the compound is generated based on data acquired through mass spectrometry of the compound. In the setting step, a search range is set on the mass spectrum of the compound based on the retention index. In the estimation step, when there is a molecular peak corresponding to the compound in the search range of the mass spectrum of the compound, a composition of the compound is estimated based on a molecular mass specified from the molecular peak. The detection time is the retention time or a time corresponding to the retention time.

The analysis method described above may be realized as a hardware function or a software function. In the case of the latter, a program for executing the analysis method described above is installed in an information processing apparatus via a network or a transportable recording medium. In the information processing apparatus, a non-transitory recording medium storing the program is provided. The information processing apparatus is, for example, a computer, an analysis system, or the like. A part of the analysis system may be formed from a computer on a network.

### (2) Details of Embodiment

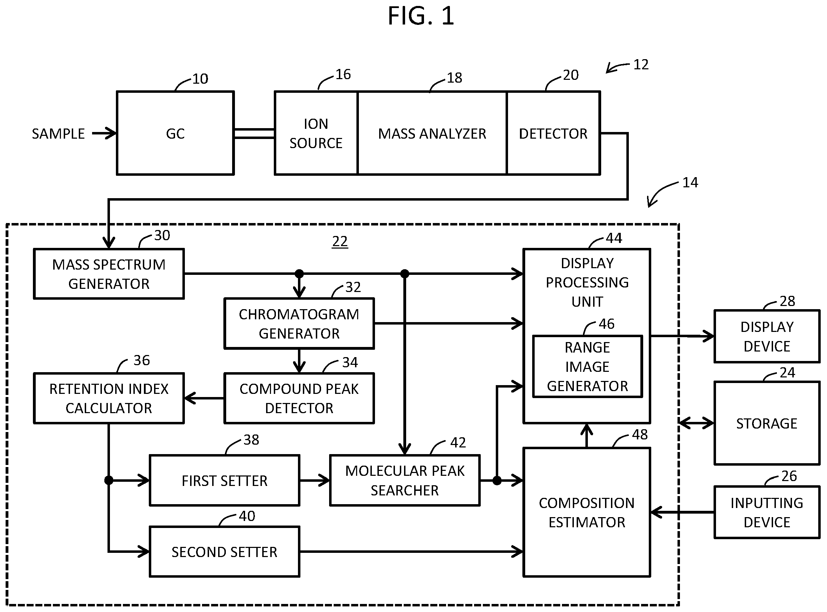

FIG. 1 shows an analysis system according to an embodiment of the present disclosure. The analysis system is a system which executes mass spectrometry and composition estimation on each compound separated from a sample.

In FIG. 1, the analysis system comprises a gas chromatograph (GC) 10, a mass spectrometer 12, and an information processing apparatus 14. The information processing apparatus 14 is an analysis apparatus which executes the analysis method according to the embodiment of the present disclosure. The GC 10 has a column which temporally separates a plurality of compounds included in the sample. The plurality of compounds which are separated are sequentially introduced into the mass spectrometer 12.

The mass spectrometer 12 comprises an ion source 16, a mass analyzer 18, and a detector 20. The ion source 16 is an ion source which follows an electron ionization method (EI). Alternatively, an ion source which follows another ionization method may be used. In the ion source 16, each compound is ionized. Ions thus generated are introduced to the mass analyzer 18. The mass analyzer 18 is, for example, a time-of-flight type mass analyzer, a quadrupole mass analyzer, or the like. Ions passing through the mass analyzer 18 are detected by the detector 20. A detection signal which is output from the detector 20 is input to the information processing apparatus 14 via a signal processing circuit (not shown).

The information processing apparatus 14 is formed from, for example, a computer, and comprises an information processing unit 22, a storage 24, an inputting device 26, and a display device 28. The information processing unit 22 has a processor that executes a program. The processor is, for example, a CPU (Central Processing Unit). In FIG. 1, a plurality of functions realized by the information processing unit 22 are represented with a plurality of blocks. The storage 24 is formed from a semiconductor memory, a hard disk drive, or the like. The inputting device 26 is formed from a keyboard or the like. The display device 28 is formed from a liquid crystal display device or the like.

A mass spectrum generator 30 generates a mass spectrum array formed from a plurality of mass spectra arranged on a time axis, based on a sequence of detection signals generated through mass spectrometry of a plurality of compounds. The mass spectrum array is sent to a chromatogram generator 32 and a display processing unit 44. The chromatogram generator 32 generates, for example, a total ion current chromatogram (TICC), which is one kind of a chromatogram, through accumulation of mass spectra forming the mass spectrum array.

The chromatogram includes a plurality of compound peaks corresponding to the plurality of compounds separated from the sample. A compound peak detector 34 detects a plurality of compound peaks included in the chromatogram. The compound peak detector 34 specifies a retention time corresponding to a representative point (for example, a peak top) in each compound peak. The retention time may alternatively be called the detection time. The retention time is an index which varies depending on a length of the column, a type of the column, a temperature of the column, or the like.

A retention index calculator 36 converts the retention time into a retention index for each compound peak. In the embodiment, prior to the measurement of the sample, a reference substance is measured. Based on a plurality of retention times corresponding to a plurality of peaks included in the chromatogram generated through this measurement, a parameter (conversion formula) for converting the retention time to the retention index is specified in advance. The retention index calculator 36 converts the retention time into the retention index for each compound using the parameter, during the measurement of the sample. As a representative reference substance, n-alkane is known. Alternatively, the sample and the reference substance may be measured simultaneously. The retention index is an objective index which does not depend on the length of the column, the type of the column, the temperature of the column, or the like.

In the embodiment, when the composition of each compound is estimated, a molecular weight range and a number-of-carbon-atoms range are determined based on the retention index. A search range is set based on the molecular weight range.

A first setter 38 is a search range setter. The first setter 38 sets, for each compound peak (that is, for each unknown compound) included in the chromatogram, a search range on the mass spectrum corresponding to the compound peak, based on the retention index corresponding to the compound peak. More specifically, the first setter 38 determines the molecular weight range from the retention index, and sets the search range based on the molecular weight range. The search range is a mass-to-charge ratio range. Alternatively, a molecular mass range may be determined in place of the molecular weight range, or the search range may be directly determined in place of the molecular weight range.

The search range is a range for searching for a molecular peak (molecular ion peak). By searching for a molecular peak in the search range, the molecular peak can be correctly specified, and, as a consequence, precision of estimating the composition of the compound can be improved.

As will be described later, an average (µa) of the molecular weight and a standard deviation (σa) of the molecular weight are defined in advance for each retention index segment. Based on the average (µa) and the standard deviation (σa) correlated to the retention index segment to which the calculated retention index belongs, a lower limit and an upper limit of the molecular weight range are defined as follows.
Lower limit of molecular weight range: $μa - k 1 x σa$ (1-1)
Upper limit of molecular weight range: $μa + k 1 x σa$ (1-2)

Here, k1 is, for example, 3. The value of k1 may be changed by the user. For example, 1 or 2 may be set as k1. The search range on the mass-to-charge ratio axis is uniquely determined from the molecular weight range.

A second setter 40 is a number-of-atoms range setter. The second setter 40 sets, for each compound peak (that is, for each unknown compound) included in the chromatogram, a number-of-carbon-atoms range based on the retention index corresponding to the compound peak. The number-of-carbon-atoms range forms a part of composition estimation conditions. By estimating the composition of the compound according to the composition estimation conditions including the number-of-carbon-atoms range which is determined automatically, the precision of estimating the composition of the compound can be improved.

As will be described later, an average (µb) of the number of carbon atoms and a standard deviation (σb) of the number of carbon atoms are determined in advance for each retention index segment. From the average (µb) and the standard deviation (σb) correlated to the retention index segment to which the calculated retention index belongs, a lower limit and an upper limit of the number-of-carbon-atoms range are determined as follows.
Lower limit of number-of-carbon-atoms range: $μb - k 2 x σb$ (2-1)
Upper limit of number-of-carbon-atoms range: $μb + k 2 x σb$ (2-2)

Here, k2 is, for example, 3. The value of k2 may be changed by the user. For example, 1 or 2 may be set as k2.

A molecular peak searcher 42 searches for the molecular peak in the search range which is set on the mass spectrum of each compound. Here, the mass spectrum is normally an accumulated mass spectrum generated through accumulation of a plurality of mass spectra corresponding to compound peaks. As will be described later, the molecular peak is searched such that both a peak intensity condition and a monoisotopic condition are satisfied.

A composition estimator 48 estimates a composition (compositional formula) of the unknown compound according to the composition estimation conditions and based on the molecular mass (accurate mass) specified from the molecular peak of the unknown compound. The composition estimation conditions include a plurality of number-of-atoms ranges corresponding to a plurality of elements. Of the plurality of number-of-atoms ranges, as described above, the upper limit and the lower limit of the number-of-carbon-atoms range are determined by the second setter 40. The other ranges of the plurality of number-of-atoms ranges are normally determined by the user.

The display processing unit 44 generates an image to be displayed on a screen of the display device 28. The display processing unit 44 has a range image generator 46. The range image generator 46 generates a range image indicating the search range which is set for the mass spectrum of the unknown compound.

On the display device 28, the chromatogram, a compound peak table, and the like are displayed. The compound peak table includes a plurality of rows corresponding to a plurality of compounds. Each row includes the retention time, the retention index, and the like. When a certain row is selected, information correlated to that row is displayed. In this case, for example, the mass spectrum, a list showing a result of the composition estimation, or the like is displayed. The mass spectrum includes the range image. Alternatively, the mass spectrum may include information for specifying the identified molecular peak.

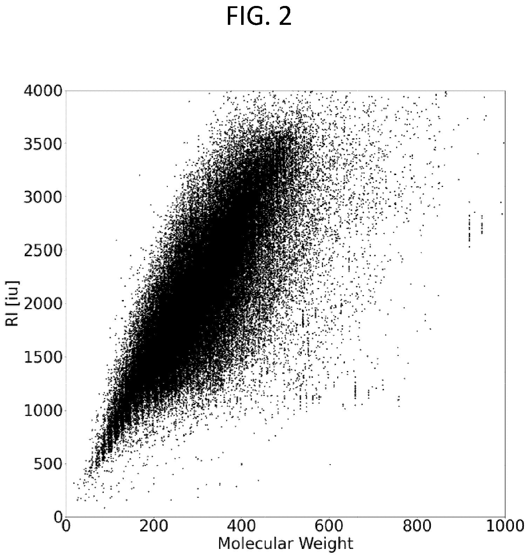

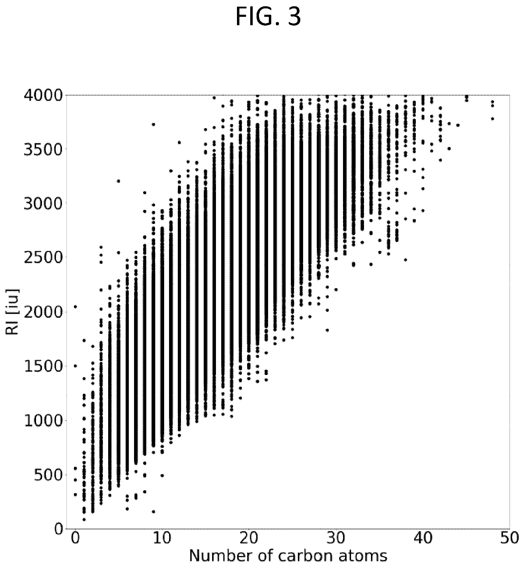

FIGs. 2 and 3 show two scatter diagrams produced based on a plurality of pieces of compound information registered in an existing compound database. Each piece of compound information includes the retention index, the molecular weight, the molecular mass, the compositional formula, or the like. The molecular weight and the molecular mass are both information indicating the mass of the molecule. The compositional formula is information indicating the number of carbon atoms. The existing compound database is, for example, a mass spectrum database provided by NIST (National Institute of Standards and Technology).

In the scatter diagram shown in FIG. 2, the horizontal axis is an axis showing the molecular weight, and the vertical axis is an axis showing the retention index. Alternatively, an axis showing the molecular mass may be employed in place of the axis showing the molecular weight. In this case, the molecular mass is the integer mass or the accurate mass. As shown in FIG. 2, there is a positive correlation between the retention index and the molecular weight.

In the scatter diagram shown in FIG. 3, the horizontal axis is an axis showing the number of carbon atoms, and the vertical axis is an axis showing the retention index. As shown in FIG. 3, there is a positive correlation between the retention index and the number of carbon atoms. Normally, the correlations as shown in FIG. 3 are not observed for other elements.

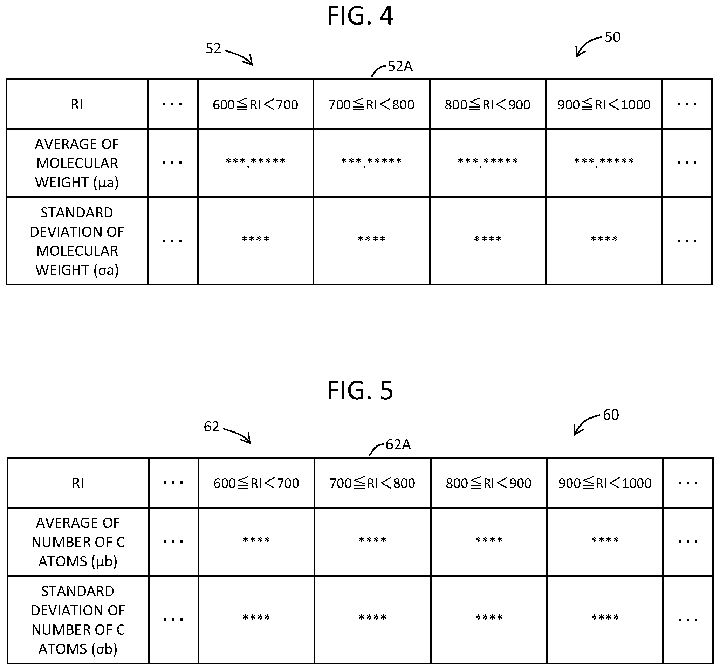

FIGs. 4 and 5 show two tables 50 and 60 produced based on a plurality of pieces of compound information registered in the compound database described above.

The table 50 illustrated in FIG. 4 is a table for specifying the average (µa) and the standard deviation (σa) of the molecular weight from the retention index. The table 60 illustrated in FIG. 5 is a table for specifying the average (µb) and the standard deviation (σb) of the number of carbon atoms (number of C atoms) from the retention index.

The two tables 50 and 60 are stored in the storage shown in FIG. 1. The calculation formulae (1-1), (1-2), (2-1), and (2-2) described above are also stored in the storage shown in FIG. 1. The first mathematical model is formed by the table 50 and the calculation formulae (1-1) and (102) described above. The second mathematical model is formed by the table 60 and the calculation formulae (2-1) and (2-2) described above.

More specifically, in the table 50 illustrated in FIG. 4, a retention index (RI) segment array 52 is formed from a plurality of retention index segments 52A. For each retention index segment 52A, the average (µa) and the standard deviation (σa) of the molecular weight are registered. When a retention index of an unknown compound is specified, the average (µa) and the standard deviation (σa) are specified based on the retention index, by referring to the table 50. These values are substituted into formulae (1-1) and (1-2) described above, to calculate the molecular weight range. The search range is determined from the molecular weight range.

In the table 60 illustrated in FIG. 5, a retention index (RI) segment array 62 is formed from a plurality of retention index segments 62A. For each retention index segment 62A, the average (µb) and the standard deviation (σb) of the number of carbon atoms are registered. When a retention index of an unknown compound is specified, the average (µb) and the standard deviation (σb) are specified based on the retention index, by referring to the table 60. These values are substituted into formulae (2-1) and (2-2) described above, to calculate the number-of-carbon-atoms range.

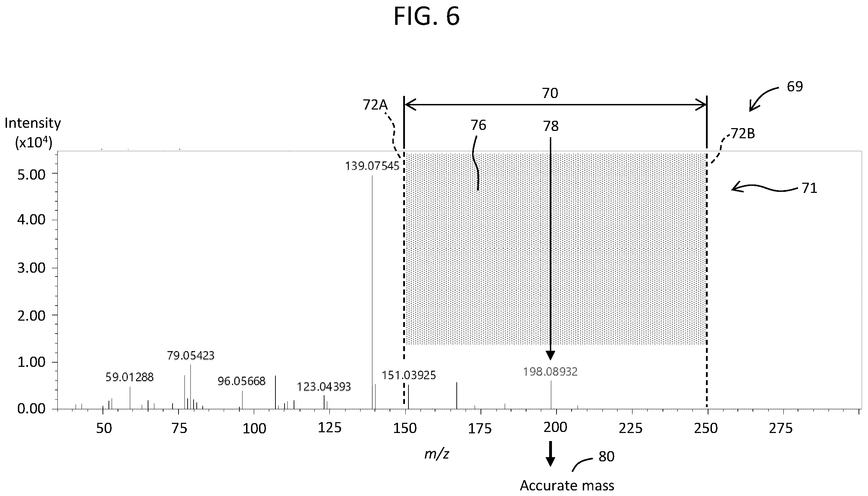

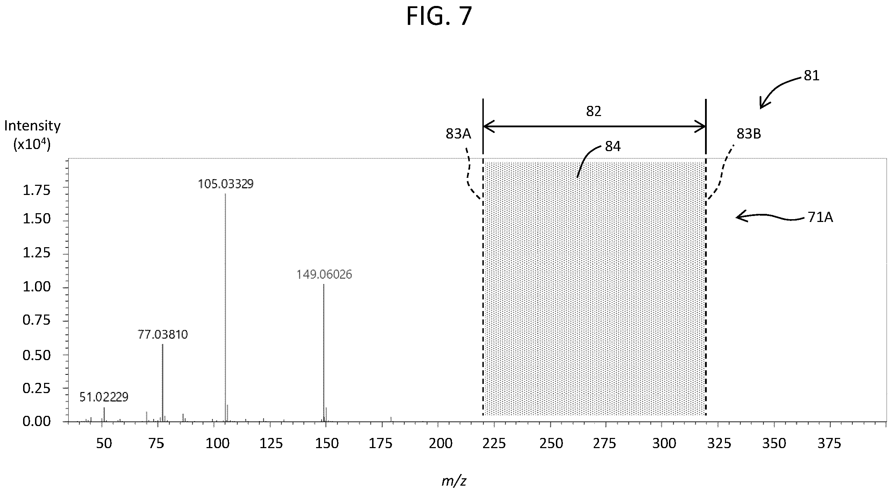

FIGs. 6 and 7 show two mass spectra 69 and 81 displayed on the display device. In each of the mass spectra 69 and 81, the horizontal axis is a mass-to-charge ratio (m/z) axis, and the vertical axis is an intensity axis.

In the mass spectrum (EI mass spectrum) 69 illustrated in FIG. 6, a search range 70 is set. For example, when the retention index is 1500, 150 is set as a lower limit of the molecular weight range, and 250 is set as an upper limit of the molecular weight range. A lower limit and an upper limit of the search range 70 are set based on these lower and upper limits of the molecular weight range.

The search range 70 is represented with a range image 71. In the illustrated example configuration, the range image 71 includes two lines 72A and 72B, and a colored area 76 between these lines. The line 72A is a line showing the lower limit of the search range 70, and the line 72B is a line showing the upper limit of the search range 70. In the search range 70, a molecular peak is searched, which satisfies the peak intensity condition and the monoisotopic condition. In the illustrated example configuration, a molecular peak 78 is specified. In this case, an accurate mass 80 is specified from the mass-to-charge ratio corresponding to the molecular peak 78. The accurate mass is used for estimating the composition of the unknown compound.

In the mass spectrum (EI mass spectrum) 81 illustrated in FIG. 7, a search range 82 is set. For example, when the retention index is 1950, 220 is determined as a lower limit of the molecular weight range, and 320 is set as an upper limit of the molecular weight range. A lower limit and an upper limit of the search range 82 are set based on these lower and upper limits of the molecular weight range.

The search range 82 is represented by a range image 71A. In the illustrated example configuration, the range image 71A includes two lines 83A and 83B, and a colored area 84. No molecular peak is included in the search range 82.

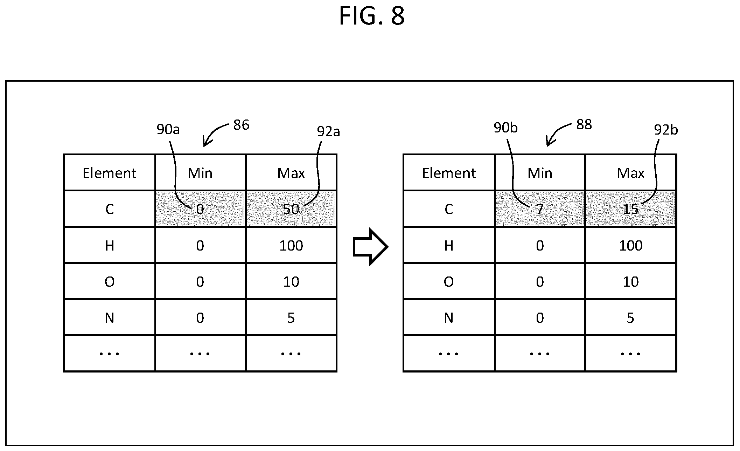

In FIG. 8, a composition estimation condition 86 is set by a user. The composition estimation condition 86 has a plurality of number-of-atoms ranges corresponding to a plurality of elements. Each number-of-atoms range is defined by a lower limit and an upper limit. For carbon, the lower limit is 0 and the upper limit is 50 (refer to reference numerals 90a and 92a).

In FIG. 8, a composition estimation condition 88 is a composition estimation condition which is changed based on the number-of-carbon-atoms range which is set in the manner described above. The lower limit of the number-of-atoms range of carbon is changed to 7 (refer to reference numeral 90b), and the upper limit is changed to 15 (refer to reference numeral 92b).

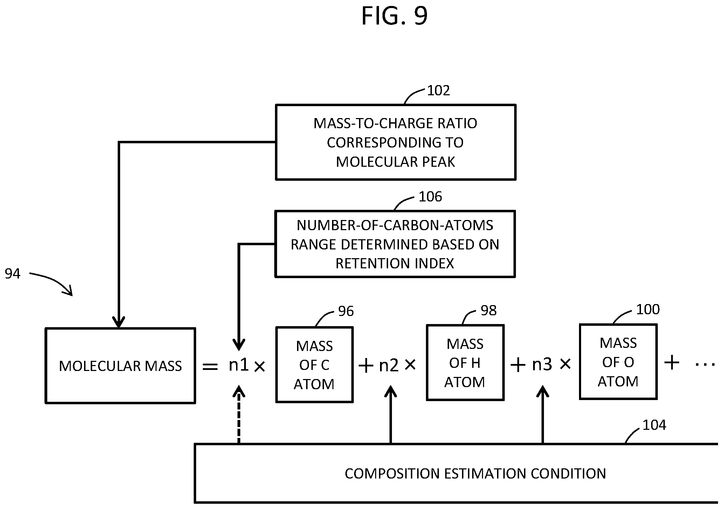

FIG. 9 shows a method of estimating a composition. A left side of a calculation formula 94 is the molecular mass (accurate mass). The molecular mass is specified from the mass-to-charge ratio corresponding to the molecular peak (refer to reference numeral 102). More specifically, the molecular mass is specified by adding mass of an electron to the mass corresponding to the mass-to-charge ratio corresponding to the molecular peak. A right side of the calculation formula 94 includes a mass of C atom (accurate mass) 96, a mass of H atom (atomic mass) 98, a mass of O atom (accurate mass) 100, and the like. In addition, the right side of the calculation formula 94 includes a coefficient n1 to be multiplied by the mass of C atom 96, a coefficient n2 to be multiplied by the mass of H atom 98, a coefficient n3 to be multiplied by the mass of O atom 100, and the like.

The coefficients n1, n2, n3, ... are integers greater than or equal to 0, and are integers within the number-of-atoms ranges determined in a composition estimation condition 104. In the embodiment, an integer belonging to the number-of-carbon-atoms range determined based on the retention index of the unknown compound (refer to reference numeral 106) is assigned to n1. The coefficients are adjusted so that the calculation formula 94 is satisfied, and the number of atoms is narrowed down for each element. With this process, the composition of the unknown compound is estimated. Alternatively, a plurality of compositions may be estimated.

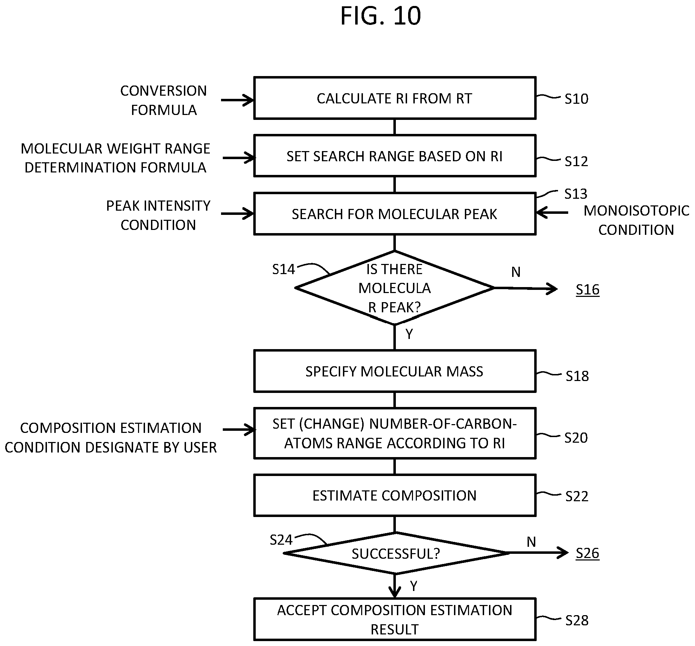

FIG. 10 shows, as a flowchart, an analysis method according to the embodiment. A sequence of processes shown in FIG. 10 is executed for each unknown compound.

In S10, the retention index (RI) is calculated from the retention time (RT). In this process, a conversion formula which is specified in advance is used. In S12, for the mass spectrum of the unknown compound, a search range is set based on the retention index. In S13, the molecular peak is searched in the search range. In this case, a peak which satisfies the peak intensity condition and the monoisotopic condition is judged as a molecular peak.

The peak intensity condition is a condition which should be satisfied by the intensity of the molecular peak. In the embodiment, a maximum intensity is specified from among a plurality of intensities of the plurality of peaks included in the mass spectrum. Then, a threshold corresponding to α% of the maximum intensity (for example, α=10) is set. The value of α is designated or changed by the user. A peak exceeding the threshold is a peak that satisfies the peak intensity condition. Alternatively, other conditions may be defined as the peak intensity condition.

The monoisotopic condition is a condition for specifying a monoisotopic peak as the molecular peak. When any of the elements included in the unknown compound has a plurality of isotopes, a plurality of isotope peaks occur. Of the plurality of isotope peaks, a peak corresponding to the largest existence ratio is the monoisotopic peak. With some exceptions, an isotope peak at the lowest mass side among the plurality of isotope peaks is the monoisotopic peak, and a condition for specifying this isotope peak is the monoisotopic condition.

In S14, presence or absence of the molecular peak in the search range is judged. When no molecular peak is specified, in S16, a display to that effect is shown. That is, non-detection of the molecular ion is displayed. With this configuration, application of other composition estimation methods is promoted. As the other composition estimation methods, there is known a composition estimation method based on a fragment peak and neutral loss.

When a molecular peak is specified in the search range, in S18, the molecular mass (accurate mass) is specified based on the mass-to-charge ratio corresponding to the molecular peak. In S20, the number-of-carbon-atoms range is set according to the retention index, and the composition estimation condition which is set by the user is thereby partially changed. In S22, the composition is estimated based on the molecular mass. When the composition estimation fails, the failure is judged in S24, and, in S26, information indicating the composition estimation failure is provided to the user. On the other hand, when the composition estimation is successful, the success is judged in S24, and, subsequently, in S28, the composition estimation result is displayed.

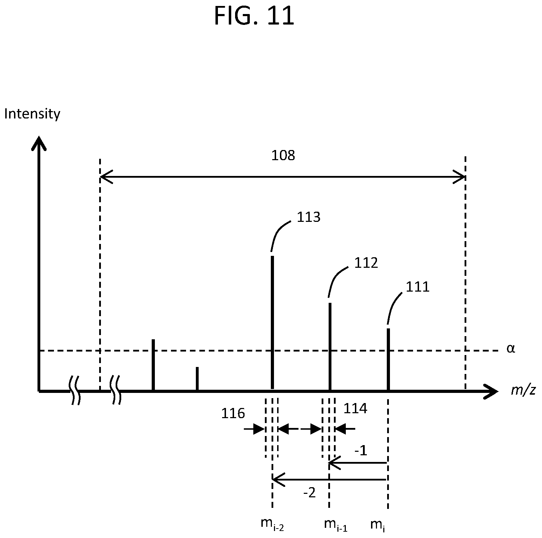

A specific example of S13 described above will now be described with reference to FIG. 11. FIG. 11 shows a mass spectrum of an unknown compound. For the mass spectrum, a search range 108 is set. A threshold α for judging whether or not the peak intensity condition is satisfied is shown.

First, in the search range 108, a peak 111 exceeding the threshold α and on the highest mass side is specified as a primary candidate peak. Based on the primary candidate peak 111, a first sub search range 114 and a second sub search range 116 are set. With mass mi corresponding to the peak 111 as a reference, a mass (mi-1) and a mass (mi-2) are specified. A local range centered at the mass (mi-1) is the first sub search range 114, and a local range centered at the mass (mi-2) is the second sub search range 116.

When there is a peak 112 exceeding the threshold α in the first sub search range 114, this peak 112 is taken as a secondary candidate peak. When there is a peak 113 exceeding the threshold α in the second sub search range 116, the peak 113 is taken as a tertiary candidate peak. Of one or a plurality of candidate peaks included in the search range 108, a peak on the lowest mass side is assumed to be the molecular peak. In the example configuration illustrated in FIG. 11, the peak 113 is judged as a molecular peak of the unknown compound. When no primary candidate peak is specified in the search range 108, information indicating non-detection of the molecular ion is provided to the user.

With the process described above, the molecular peak satisfying the peak intensity condition and the monoisotopic condition is correctly identified.

According to the embodiment described above, because the molecular peak included in the mass spectrum of the compound can be correctly identified, and conditions for estimating the composition of the compound can be narrowed down, the precision for estimating the composition of the compound can be improved.

## Claims

1. An analysis apparatus comprising:
a calculator (36) that calculates, based on a detection time at which a compound from a gas chromatograph is detected by a mass spectrometer, a retention index of the compound;
a generator (30) that generates a mass spectrum of the compound based on data acquired through mass spectrometry of the compound;
a setter (38) that sets a search range on the mass spectrum of the compound based on the retention index, the search range being a mass-to-charge ratio range; and
an estimator (48) that estimates, when there is a molecular peak corresponding to the compound in the search range of the mass spectrum of the compound, a composition of the compound based on a molecular mass specified from the molecular peak,
**characterised in that** the setter (38)
sets a lower limit of the search range based on the retention index, and
sets a upper limit of the search range based on the retention index.

2. The analysis apparatus according to claim 1, wherein
the setter (38) sets the search range according to a first mathematical model for determining the lower limit and the upper limit of the search range based on the retention index.

3. The analysis apparatus according to claim 2, wherein
the first mathematical model is a mathematical model generated based on a plurality of pieces of compound information registered in a compound database, and
each piece of the compound information includes a retention index and information indicating a molecular mass.

4. The analysis apparatus according to any preceding claim, further comprising:
a searcher (42) that searches for the molecular peak in the search range of the mass spectrum of the compound.

5. The analysis apparatus according to claim 4, wherein
the searcher (42):
specifies, among one or a plurality of peaks belonging to the search range, a peak which satisfies a peak intensity condition and which exists at a highest mass side, as a candidate peak;
judges, when there is a peak which satisfies the peak intensity condition and a monoisotopic condition at a lower mass side of the candidate peak, the peak as the molecular peak; and
judges, when there is no peak which satisfies the peak intensity condition and the monoisotopic condition at the lower mass side of the candidate peak, the candidate peak as the molecular peak.

6. The analysis apparatus according to claim 4, wherein
when there is no molecular peak in the search range of the mass spectrum of the compound, information indicating non-detection of a molecular ion is provided to a user.

7. The analysis apparatus according to any preceding claim, further comprising:
a display processing unit (44) that displays, along with the mass spectrum, a range image indicating the search range.

8. The analysis apparatus according to any preceding claim, wherein
the setter is a first setter (38),
a second setter (40) is provided, which sets a number-of-carbon-atoms range based on the retention index, and
the estimator (48) estimates the composition of the compound according to a composition estimation condition including the number-of-carbon-atoms range.

9. The analysis apparatus according to claim 8, wherein
the second setter (40) sets the number-of-carbon-atoms range according to a second mathematical model for determining a lower limit and an upper limit of the number-of-carbon-atoms range based on the retention index.

10. The analysis apparatus according to claim 9, wherein
the second mathematical model is a mathematical model generated based on a plurality of pieces of compound information registered in a compound database, and
each piece of the compound information includes a retention index and information indicating a number of carbon atoms.

11. An analysis method comprising the steps of:
calculating (S10), based on a detection time at which a compound from a gas chromatograph (10) is detected by a mass spectrometer (12), a retention index of the compound;
generating a mass spectrum of the compound based on data acquired through mass spectrometry of the compound;
setting (S12) a search range on the mass spectrum of the compound based on the retention index, the search range being a mass-to-charge ratio range; and
estimating (S22), when there is a molecular peak corresponding to the compound in the search range of the mass spectrum of the compound, a composition of the compound based on a molecular mass specified from the molecular peak,
**characterised in that** setting (S12) a search range comprises:
setting a lower limit of the search range based on the retention index, and
setting a upper limit of the search range based on the retention index.

12. A program executed by an information processing apparatus, the program comprising the function of:
calculating (S10), based on a detection time at which a compound from a gas chromatograph (10) is detected by a mass spectrometer (12), a retention index of the compound;
generating a mass spectrum of the compound based on data acquired through mass spectrometry of the compound;
setting (S12) a search range on the mass spectrum of the compound based on the retention index, the search range being a mass-to-charge ratio range; and
estimating (S22), when there is a molecular peak corresponding to the compound in the search range of the mass spectrum of the compound, a composition of the compound based on a molecular mass specified from the molecular peak,
**characterised in that** setting (S12) a search range comprises:
setting a lower limit of the search range based on the retention index, and setting a upper limit of the search range based on the retention index.

## Patentansprüche

1. Analyseeinrichtung, umfassend:
einen Rechner (36), der basierend auf einer Detektionszeit, zu der eine Verbindung aus einem Gaschromatographen von einem Massenspektrometer detektiert wird, einen Retentionsindex der Verbindung berechnet;
einen Generator (30), der ein Massenspektrum der Verbindung basierend auf Daten generiert, die durch Massenspektrometrie der Verbindung gewonnen werden;
einen Einsteller (38), der einen Suchbereich im Massenspektrum der Verbindung basierend auf dem Retentionsindex einstellt, wobei der Suchbereich ein Masse-zu-Ladungs-Verhältnisbereich ist; und
einen Schätzer (48), der, wenn im Suchbereich des Massenspektrums der Verbindung ein Molekülpeak vorhanden ist, der der Verbindung entspricht, eine Zusammensetzung der Verbindung basierend auf einer aus dem Molekülpeak spezifizierten Molekülmasse schätzt,
**dadurch gekennzeichnet, dass** der Einsteller (38)
eine Untergrenze des Suchbereichs basierend auf dem Retentionsindex einstellt und
eine Obergrenze des Suchbereichs basierend auf dem Retentionsindex einstellt.

2. Analyseeinrichtung nach Anspruch 1, wobei
der Einsteller (38) den Suchbereich nach einem ersten mathematischen Modell zum Bestimmen der Untergrenze und der Obergrenze des Suchbereichs basierend auf dem Retentionsindex einstellt.

3. Analyseeinrichtung nach Anspruch 2, wobei
das erste mathematische Modell ein mathematisches Modell ist, das basierend auf einer Vielzahl von Verbindungsinformationen generiert wird, die in einer Verbindungsdatenbank registriert sind, und
jede Verbindungsinformation einen Retentionsindex und Informationen beinhaltet, die eine Molekülmasse angeben.

4. Analyseeinrichtung nach einem vorstehenden Anspruch, ferner umfassend:
einen Sucher (42), der im Suchbereich des Massenspektrums der Verbindung nach dem Molekülpeak sucht.

5. Analyseeinrichtung nach Anspruch 4, wobei
der Sucher (42):
unter einem oder einer Vielzahl von Peaks, die zum Suchbereich gehören, einen Peak, der eine Peakintensitätsbedingung erfüllt und sich auf der Seite mit der höchsten Masse befindet, als Kandidatenpeak spezifiziert;
wenn ein Peak vorliegt, der die Peakintensitätsbedingung und die Monoisotopenbedingung auf der Seite mit der geringeren Masse des Kandidatenpeaks erfüllt, den Peak als Molekülpeak bewertet; und
wenn es auf der Seite mit der geringeren Masse des Kandidatenpeaks keinen Peak gibt, der die Peakintensitätsbedingung und die Monoisotopenbedingung erfüllt, den Kandidatenpeak als Molekülpeak bewertet.

6. Analyseeinrichtung nach Anspruch 4, wobei
wenn im Suchbereich des Massenspektrums der Verbindung kein Molekülpeak vorhanden ist, Informationen, die eine Nicht-Detektion eines Molekülions angeben, einem Benutzer bereitgestellt werden.

7. Analyseeinrichtung nach einem vorstehenden Anspruch, ferner umfassend:
eine Anzeigeverarbeitungseinheit (44), die zusammen mit dem Massenspektrum ein Entfernungsbild anzeigt, das den Suchbereich angibt.

8. Analyseeinrichtung nach einem vorstehenden Anspruch, wobei
der Einsteller ein erster Einsteller (38) ist,
ein zweiter Einsteller (40) bereitgestellt ist, der einen Bereich der Anzahl von Kohlenstoffatomen basierend auf dem Retentionsindex einstellt, und
der Schätzer (48) die Zusammensetzung der Verbindung nach einer Zusammensetzungsschätzungsbedingung schätzt, die den Bereich der Anzahl von Kohlenstoffatomen beinhaltet.

9. Analyseeinrichtung nach Anspruch 8, wobei
der zweite Einsteller (40) den Bereich der Anzahl von Kohlenstoffatomen nach einem zweiten mathematischen Modell einstellt, um eine Untergrenze und eine Obergrenze des Bereichs der Anzahl von Kohlenstoffatomen basierend auf dem Retentionsindex zu bestimmen.

10. Analyseeinrichtung nach Anspruch 9, wobei
das zweite mathematische Modell ein mathematisches Modell ist, das basierend auf einer Vielzahl von Verbindungsinformationen generiert wird, die in einer Verbindungsdatenbank registriert sind, und
jede Verbindungsinformation einen Retentionsindex und Informationen beinhaltet, die eine Anzahl von Kohlenstoffatomen angeben.

11. Analyseverfahren, das folgende Schritte umfasst:
Berechnen (S10), basierend auf einer Detektionszeit, zu der eine Verbindung aus einem Gaschromatographen (10) von einem Massenspektrometer (12) detektiert wird, eines Retentionsindex der Verbindung;
Generieren eines Massenspektrums der Verbindung basierend auf Daten, die durch Massenspektrometrie der Verbindung gewonnen werden;
Einstellen (S12) eines Suchbereichs im Massenspektrum der Verbindung basierend auf dem Retentionsindex, wobei der Suchbereich ein Masse-zu-Ladungs-Verhältnisbereich ist; und
Schätzen (S22), wenn im Suchbereich des Massenspektrums der Verbindung ein Molekülpeak vorhanden ist, der der Verbindung entspricht, einer Zusammensetzung der Verbindung basierend auf einer aus dem Molekülpeak spezifizierten Molekülmasse,
**dadurch gekennzeichnet, dass** Einstellen (S12) eines Suchbereichs umfasst:
Einstellen einer Untergrenze des Suchbereichs basierend auf dem Retentionsindex und
Einstellen einer Obergrenze des Suchbereichs basierend auf dem Retentionsindex.

12. Programm, das von einer Informationsverarbeitungseinrichtung ausgeführt wird, wobei das Programm die folgende Funktion umfasst:
Berechnen (S10), basierend auf einer Detektionszeit, zu der eine Verbindung aus einem Gaschromatographen (10) von einem Massenspektrometer (12) detektiert wird, eines Retentionsindex der Verbindung;
Generieren eines Massenspektrums der Verbindung basierend auf Daten, die durch Massenspektrometrie der Verbindung gewonnen werden;
Einstellen (S12) eines Suchbereichs im Massenspektrum der Verbindung basierend auf dem Retentionsindex, wobei der Suchbereich ein Masse-zu-Ladungs-Verhältnisbereich ist; und
Schätzen (S22), wenn im Suchbereich des Massenspektrums der Verbindung ein Molekülpeak vorhanden ist, der der Verbindung entspricht, einer Zusammensetzung der Verbindung basierend auf einer aus dem Molekülpeak spezifizierten Molekülmasse,
**dadurch gekennzeichnet, dass** Einstellen (S12) eines Suchbereichs umfasst:
Einstellen einer Untergrenze des Suchbereichs basierend auf dem Retentionsindex und Einstellen einer Obergrenze des Suchbereichs basierend auf dem Retentionsindex.

## Revendications

1. Appareil d'analyse comprenant :
une calculatrice (36) qui calcule, sur la base d'un temps de détection auquel un composé provenant d'un chromatographe en phase gazeuse est détecté par un spectromètre de masse, un indice de rétention du composé ;
un générateur (30) qui génère un spectre de masse du composé sur la base de données acquises par spectrométrie de masse du composé ;
un dispositif de réglage (38) qui définit une plage de recherche sur le spectre de masse du composé sur la base de l'indice de rétention, la plage de recherche étant une plage de rapport masse/charge ; et
un estimateur (48) qui estime, lorsqu'il existe un pic moléculaire correspondant au composé dans la plage de recherche du spectre de masse du composé, une composition du composé sur la base d'une masse moléculaire spécifiée à partir du pic moléculaire,
**caractérisé en ce que** le dispositif de réglage (38)
définit une limite inférieure de la plage de recherche sur la base de l'indice de rétention, et
définit une limite supérieure à la plage de recherche sur la base de l'indice de rétention.

2. Appareil d'analyse selon la revendication 1, dans lequel
le dispositif de réglage (38) définit la plage de recherche selon un premier modèle mathématique pour déterminer la limite inférieure et la limite supérieure de la plage de recherche sur la base de l'indice de rétention.

3. Appareil d'analyse selon la revendication 2, dans lequel
le premier modèle mathématique est un modèle mathématique généré sur la base d'une pluralité d'éléments d'informations de composé enregistrés dans une base de données de composé, et
chaque élément des informations de composé inclut un indice de rétention et des informations indiquant une masse moléculaire.

4. Appareil d'analyse selon une quelconque revendication précédente, comprenant en outre :
un dispositif de recherche (42) qui recherche le pic moléculaire dans la plage de recherche du spectre de masse du composé.

5. Appareil d'analyse selon la revendication 4, dans lequel
le dispositif de recherche (42) :
spécifie, parmi un ou une pluralité de pics appartenant à la plage de recherche, un pic qui remplit une condition d'intensité de pic et qui existe du côté de la masse la plus élevée, comme pic candidat ;
juge, lorsqu'il existe un pic qui remplit la condition d'intensité de pic et une condition monoisotopique du côté de la masse inférieure du pic candidat, que le pic est le pic moléculaire ; et
juge, lorsqu'il n'y a pas de pic qui remplit la condition d'intensité de pic et la condition monoisotopique du côté de la masse inférieure du pic candidat, que le pic candidat est le pic moléculaire.

6. Appareil d'analyse selon la revendication 4, dans lequel
lorsqu'aucun pic moléculaire n'est détecté dans la plage de recherche du spectre de masse du composé, des informations indiquant la non-détection d'un ion moléculaire sont fournies à l'utilisateur.

7. Appareil d'analyse selon une quelconque revendication précédente, comprenant en outre :
une unité de traitement d'affichage (44) qui affiche, avec le spectre de masse, une image de plage indiquant la plage de recherche.

8. Appareil d'analyse selon une quelconque revendication précédente, dans lequel
le dispositif de réglage est un premier dispositif de réglage (38),
un second dispositif de réglage (40) est fourni, qui définit une plage de nombre d'atomes de carbone sur la base de l'indice de rétention, et
l'estimateur (48) estime la composition du composé selon une condition d'estimation de composition incluant la plage de nombre d'atomes de carbone.

9. Appareil d'analyse selon la revendication 8, dans lequel
le second dispositif de réglage (40) définit la plage de nombre d'atomes de carbone selon un second modèle mathématique pour déterminer une limite inférieure et une limite supérieure de la plage de nombre d'atomes de carbone sur la base de l'indice de rétention.

10. Appareil d'analyse selon la revendication 9, dans lequel
le second modèle mathématique est un modèle mathématique généré à partir d'une pluralité d'éléments d'informations de composé enregistrés dans une base de données de composé, et
chaque élément des informations de composé inclut un indice de rétention et des informations indiquant le nombre d'atomes de carbone.

11. Procédé d'analyse comprenant les étapes de :
calcul (S10), sur la base d'un temps de détection auquel un composé provenant d'un chromatographe en phase gazeuse (10) est détecté par un spectromètre de masse (12), d'un indice de rétention du composé ;
génération d'un spectre de masse du composé sur la base de données acquises par spectrométrie de masse du composé ;
définition (S12) d'une plage de recherche sur le spectre de masse du composé sur la base de l'indice de rétention, la plage de recherche étant une plage de rapport masse/charge ; et
estimation (S22), lorsqu'il existe un pic moléculaire correspondant au composé dans la plage de recherche du spectre de masse du composé, d'une composition du composé sur la base d'une masse moléculaire spécifiée à partir du pic moléculaire,
**caractérisé en ce que** la définition (S12) d'une plage de recherche comprend :
la définition d'une limite inférieure de la plage de recherche sur la base de l'indice de rétention, et
la définition d'une limite supérieure de la plage de recherche sur la base de l'indice de rétention.

12. Programme exécuté par un appareil de traitement d'informations, le programme comprenant la fonction de :
calcul (S10), sur la base d'un temps de détection auquel un composé provenant d'un chromatographe en phase gazeuse (10) est détecté par un spectromètre de masse (12), d'un indice de rétention du composé ;
génération d'un spectre de masse du composé sur la base de données acquises par spectrométrie de masse du composé ;
définition (S12) d'une plage de recherche sur le spectre de masse du composé sur la base de l'indice de rétention, la plage de recherche étant une plage de rapport masse/charge ; et
estimation (S22), lorsqu'il existe un pic moléculaire correspondant au composé dans la plage de recherche du spectre de masse du composé, d'une composition du composé sur la base d'une masse moléculaire spécifiée à partir du pic moléculaire,
**caractérisé en ce que** la définition (S12) d'une plage de recherche comprend :
la définition d'une limite inférieure de la plage de recherche sur la base de l'indice de rétention, et la définition d'une limite supérieure de la plage de recherche sur la base de l'indice de rétention.
